(19) Europäisches Patentamt
European Patent Office
Office européen des brevets

(11) Publication number: **0 182 316 B1**

(12) **EUROPEAN PATENT SPECIFICATION**

(45) Date of publication of patent specification: **05.02.92**

(51) Int. Cl.[5]: **C08F 283/01**, C09D 157/06, //(C08F283/01,230:08), (C09D157/06,143:04), (C09D157/06,167:06)

(21) Application number: **85114556.5**

(22) Date of filing: **16.11.85**

(54) **Polyester-modified vinyl resin and use thereof.**

(30) Priority: **19.11.84 JP 243600/84**

(43) Date of publication of application:
**28.05.86 Bulletin 86/22**

(45) Publication of the grant of the patent:
**05.02.92 Bulletin 92/06**

(84) Designated Contracting States:
**BE DE FR GB IT NL**

(56) References cited:
**BE-A- 546 203**
**GB-A- 735 405**
**GB-A- 2 053 251**
**US-A- 3 398 210**

**CHEMICAL ABSTRACTS, vol. 101, no. 4, July 1984, page 77, abstract no. 25053m, Columbus, Ohio, US**

(73) Proprietor: **KANEGAFUCHI KAGAKU KOGYO KABUSHIKI KAISHA**
**2-4 Nakanoshima 3-chome**
**Kita-ku Osaka-shi(JP)**

(72) Inventor: **Kato, Yasushi**
**1-11-3, Katayama-cho Nagata-ku**
**Kobe-shi Hyogo-ken(JP)**
Inventor: **Furukawa, Hisao**
**6-523, Maikodai 6-chome Tarumi-ku**
**Kobe-shi Hyogo-ken(JP)**
Inventor: **Kagitani, Shinji**
**Sanseiso 31-17, Shioya-cho 6-chome**
**Tarumi-ku Kobe-shi Hyogo-ken(JP)**
Inventor: **Matsumura, Shoichi**
**14-2, Takakuradi 1-chome Suma-ku**
**Kobe-shi Hyogo-ken(JP)**

(74) Representative: **Türk, Gille, Hrabal**
**Brucknerstrasse 20**
**W-4000 Düsseldorf 13(DE)**

**EP 0 182 316 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a silyl group-containing, polyester-modified vinyl polymer having in its molecule at least one silane compound residue to which a specific hydrolysable group is bonded at the molecular end or side chains, and having excellent dispersibility, color match stability and storage stability.

"Chemical Abstract" 101, 1984, Abstract No. 25 053 m, describes a silyl group-containing, polyester-modified vinyl polymer comprising units of a polyester resin, units of a copolymerizable vinyl monomer and units of a silane compound. The silane compound used in this reference is trialkylsiloxyalkyl (meth)-acrylate and/or triphenylsiloxyalkyl (meth)-acrylate which does not have any hydrolyzable group. Therefore, the acrylic copolymer described therein cannot be intermolecularly cross-linked by hydrolysis of hydrolyzable groups attached to a silicon atom to cure the copolymer. Therefore, the acrylic copolymer of this reference has to be cured by using cross-linking agents which results in problems such as toxicity, very low curing rate and durability of the cured product.

JP-A-36 395/1979 discloses that a vinyl polymer containing a silyl group having a hydrolyzable group at the molecular ends or side chains not only has excellent glossiness, weatherability, discoloration resistance, and the like, which are characteristics of the vinyl polymer itself, but also has an improved adhesion resulting from the hydrolyzable silyl groups and forms a polymer having excellent solvent-resistance, water-resistance, heat-resistance and weatherability and high hardness by causing a cross-linking reaction with water, particularly water in the atmosphere, even at ordinary temperature to form a fine network structure.

There are various methods of the dispersion of pigments or stabilization of color match. Generally, there is carried out a method in which a dispersing agent is employed or a method in which acid or basic polar groups are introduced into a polymer. With respect to the use of the dispersing agent, the dispersing agent is effective in the dispersion of a single color, but the enamel paint in which a pigment is dispersed is separated into a clear layer and an enamel layer in a long storage. Also the floating often occurs upon color matching of different colors. With respect to the method of introducing the acid or base polar groups into the polymer, the method is mainly carried out in general polymers for use in paint, but in the vinyl polymer, it is necessary to introduce many polar groups into the vinyl polymer for a good dispersibility.

With respect to a silyl group-containing vinyl polymer that the present inventors have studied, introduction of many acid or basic polar groups into the polymer causes a problem in point of the storage stability of the polymer because of having in the polymer silyl groups to which the hydrolyzable groups are bonded.

The object of the present invention is to provide a polymer suitable for coatings and paints having improved pigment-dispersibility and storage stability.

It has now been found that this object can be achieved according to the present invention by modifying the silyl group-containing vinyl polymer with a polyester resin including a polymerizable unsaturated group.

Subject-matter of the present invention is a silyl group-containing, polyester-modified vinyl polymer comprising

(A) 3 to 45 % by weight of units of a polyester resin including a polymerizable unsaturated group,

(B) 5 to 30 % by weight of units of a silane compound of the general formula

$$R^2-\overset{(R^1)_{3-n}}{\overset{|}{Si}}-X_n \qquad (I)$$

wherein $R^1$ is a hydrogen atom or a monovalent hydrocarbon group having 1 to 10 carbon atoms selected from the group consisting of an alkyl group, an aryl group and an aralkyl group, $R^2$ is an organic residue having a polymerizable double bond, X is a halogen atom, an alkoxyl group, an acyloxyl group, a ketoxymate group, amino group, an acid amide group, an aminoxy group, a mercapto group, or an alkenyloxy group, and n is an integer of 1 to 3, and

(C) 25 to 92 % by weight of units of a copolymerizable vinyl monomer.

That is, the polymer of the present invention is a silyl group-containing vinyl polymer modified with the polyester which has one or more silyl groups to which at least one hydrolyzable group is bonded at the molecular ends or side chains. The vinyl polymer of the present invention is excellent in storage stability as well as in dispersibility of pigment and color match stability and so is suitable for use in coatings including lacquers.

In particular, it has been found that when the silyl group-containing vinyl polymer of the present invention is modified with a polyester resin including a polymerizable unsaturated group, the dispersibility of

pigments and the color match stability of pigments are extremely improved and the polymer does not cause a problem in point of the storage stability.

According to a preferred embodiment of the present invention component (C) of the vinyl polymer includes a polar group.

According to a further aspect the present invention relates to the vinyl polymer as defined above which is prepared by polymerization of said polyester resin, said silane compound and said vinyl monomer.

According to a third aspect the present invention relates to the use of the silyl group-containing, polyester-modified vinyl polymer as defined above as film forming agent in coatings, particularly lacquers.

The polymer of the present invention is silyl group-containing vinyl polymer modified with a polyester (hereinafter referred to as "polyester-modified vinyl polymer") having in its molecule at least one, preferably 2 or more silyl groups to which the hydrolyzable groups are bonded at the molecular ends or side chains. The silyl groups are represented by the formula:

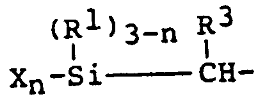

wherein X is a hydrolyzable group as defined below, $R^1$ is as defined above, $R^3$ is a member selected from the group consisting of hydrogen atom, an alkyl group having 1 to 10 carbon atoms, an aryl group having 1 to 10 carbon atoms and an aralkyl group having 1 to 10 carbon atoms, and n is an integer of 1 to 3.

The hydrolyzable group (X) includes a halogen atom, an alkoxyl group, an acyloxyl group, a ketoxymate group, amino group and acid amide group, an aminoxy group, a mercapto group, and an alkenyloxy group.

The polyester-modified vinyl polymer of the invention can be prepared by various processes. Among them, it is industrially preferable that the polyester polymer having the polymerizable unsaturated group (A), the organic silane compound including the polymerizable unsaturated group (B) and the copolymerizable vinyl monomer (C) are copolymerized.

The polyester resin having the polymerizable unsaturated group (A) employed in the invention is not particularly limited except that the polyester resin must have at least one unsaturated group copolymerizable with the vinyl monomer. The molecular weight of the resin (A) is usually such that the viscosity of a 60 % by weight solution of the resin in xylene is from 100 to 10 000 mPa•s (cP).

The polyester resin (A) can be prepared by conventional methods. As components of the polyester resin (A), there are mentioned, for instance, (a) an oil such as safflower oil, linseed oil, soya bean oil, castor oil, coconut oil, palm kernel oil, tung oil, dehydrated castor oil, or a fatty acid thereof; (b) an unsaturated dibasic acid such as maleic acid, maleic anhydride, fumaric acid, mesaconic acid, citraconic acid, itaconic acid, chlorinated maleic acid or a saturated polybasic acid such as phthalic acid, phthalic anhydride, tetrahydrophthalic anhydride, succinic anhydride, tetrahydrophthalic acid, adipic acid, sebacic acid, hexahydrophthalic anhydride, tetrachlorophthalic anhydride, tetrabromophthalic anhydride, malonic acid, pyromellitic acid, pyromellitic anhydride, 3,6-endomethylene-1,2,3,-6-tetrahydrophthalic anhydride, trimellitic acid, trimellitic anhydride, methylcyclohexene tricarbonic acid; and (c) a polyhydric alcohol such as ethylene glycol, diethylene glycol, propylene glycol, dipropylene glycol, 1,3-butylene glycol, 2,3-butanediol, 2,3-butylene glycol, bisphenol dioxypropyl ether, bisphenol dioxyethyl ether, neopentyl glycol, 1,4-butenediol, 1,6-hexanediol, glycerol, triethylene glycol, trimethylolprpane, pentaerythritol, dipentaerythritol, triethylene glycol, bisphenol A hydride, bisphenol, dihydroxy propyl ether, trimethylolethane, trishydroxymethylaminomethane. The component (a) may be optionally used. The polyester resin (A) can be prepared by heating the components (a), (b) and (c).

Also the polyester resin of the invention (A) is prepared by employing allyl alcohol, allyl glycidyl ether, diallyl alcohol of trimethylolpropane, monoallyl alcohol of trimethylolpropane or glycidyl methacrylate, instead of a part of the (c) component in the above-mentioned process, or by employing crotonic acid, sorbic acid, acrylic acid, or methacrylic acid, instead of a part of the (b) component in the above-mentioned process, or by reacting allyl glycidyl ether, glycidyl acrylate, or glycidyl methacrylate with a general polyester resin including a carboxyl group. Moreover, the polyester resin copolymerizable with vinyl monomer (A) can be prepared by employing allyl glycidyl ether, glycidyl acrylate, or glycidyl methacrylate, as a part of an epoxy compound in the presence of a tertiary amine upon reacting the epoxy compound with a carboxylic anhydride to prepare the polyester resin (A).

The organic silane compound including the polymerizable unsaturated group (B) used in the present invention is represented by the formula (I):

$$R^2-\overset{(R^1)_{3-n}}{\overset{|}{Si}}-X_n \qquad (I)$$

wherein $R^1$ is a hydrogen atom or a monovalent hydrocarbon group having 1 to 10 carbon atoms selected from the group consisting of an alkyl group, an aryl group and an aralkyl group, $R^2$ is an organic residue having a polymerizable double bond, X is a hydrolyzable group as defined above and n is an integer of 1 to 3. Examples of the organic silane compound (B) are, for instance,

$$CH_2{=}CH\overset{CH_3}{\overset{|}{Si}}(OCH_3)_2, \quad CH_2{=}CH\overset{CH_3}{\overset{|}{Si}}C\ell_2,$$

$$CH_2{=}CHSi(OCH_3)_3, \quad CH_2{=}CHSiC\ell_3,$$

$$CH_2{=}CHCOO(CH_2)_3\overset{CH_3}{\overset{|}{Si}}(OCH_3)_2,$$

$$CH_2{=}CHCOO(CH_2)_3Si(OCH_3)_3,$$

$$CH_2{=}CHCOO(CH_2)_3\overset{CH_3}{\overset{|}{Si}}C\ell_2,$$

$$CH_2{=}CHCOO(CH_2)_3SiC\ell_3,$$

$$CH_2{=}C(CH_3)COO(CH_2)_3\overset{CH_3}{\overset{|}{Si}}(OCH_3)_2,$$

$$CH_2{=}C(CH_3)COO(CH_2)_3Si(OCH_3)_3,$$

$$CH_2{=}C(CH_3)COO(CH_2)_3\overset{CH_3}{\overset{|}{Si}}C\ell_2$$

$$CH_2{=}C(CH_3)COO(CH_2)_3SiC\ell_3,$$

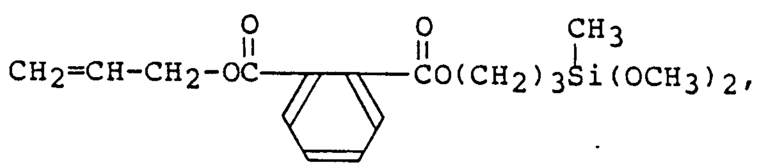

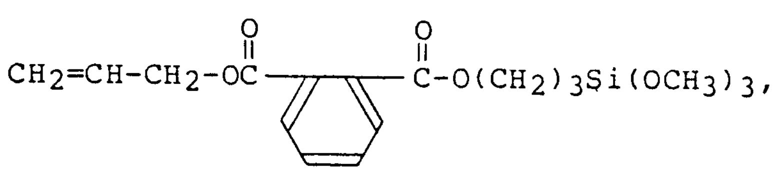

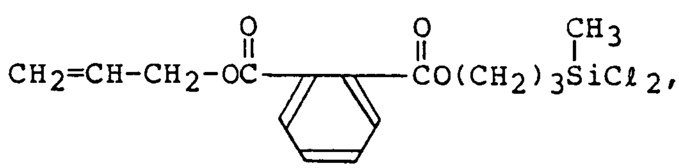

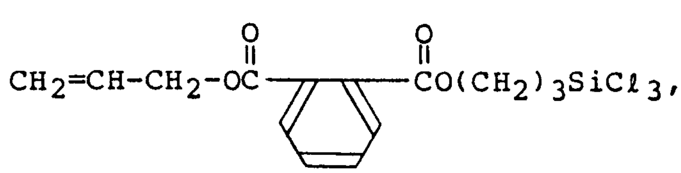

and the like. The organic silane compounds (B) may be employed alone or in admixture thereof.

The vinyl monomer (C) used in the present invention is not particularly limited. Examples of the vinyl monomer (C) are, for instance, an acrylic acid ester such as methyl acrylate, ethyl acrylate, butyl acrylate or 2-ethylhexyl acrylate; a methacrylic acid ester such as methyl methacrylate, ethyl methacrylate, butyl methacrylate or 2-ethylhexyl methacrylate; a carboxylic acid such as acrylic acid, methacrylic acid, itaconic acid or fumaric acid; an acid anhydride such as maleic anhydride; an epoxy compound such as glycidyl acrylate or glycidyl methacrylate; an amino compound such as diethylaminoethyl acrylate, diethylaminoethyl methacrylate or aminoethyl vinyl ether; an amide compound such as acrylamide, methacrylamide, itaconic diamide, α-ethylacrylamide, crotonamide, fumaric diamide, maleic diamide, N-butoxymethylacrylamide or N-butoxymethylmethacrylamide; a vinyl compound including hydroxyl group such as 2-hydroxyethylacrylate, 2-hydroxyethylmethacrylate, 2-hydroxypropylacrylate, 2-hydroxypropylmethacrylate, 2-hydroxyvinyl ether, N-methylolacrylamide or Aronix 5700® (made by Toagosei Chemical Industry Co., Ltd.); acrylonitrile, iminol methacrylate, styrene, α-methyl styrene vinyl chloride, vinyl acetate, and vinyl propionate,. The vinyl monomers (C) may be employed alone or in admixture thereof.

As the process for preparing the copolymer composed of the polyester resin (A) the organic silane compound (B) and the vinyl monomer (C), there are general solution polymerization processes. That is, the polyester resin (A), the organic silane compound (B), the vinyl monomer (C), a radical initiator, and, if necessary, a chain transfer agent such as n-dodecyl mercaptan, t-dodecyl mercaptan, or mercaptosilane, for obtaining the copolymer having a desired molecular weight, are reacted at 50° to 150°C. As a solvent, it is preferable to employ unreactive solvent such as ethers, hydrocarbons or acetic acid esters, more preferably, a solvent to which an alcohol is added, because of increasing the stability upon preparing the copolymer.

The content of the polyester resin in the polyester-modified vinyl polymer is from 3 to 45 % by weight. When the content of the polyester resin is less than 3 % by weight, the dispersibility cannot be increased. On the other hand, when the content is more than 45 % by weight, the solvent-resistance, staining-resistance and particularly weatherability (yellowing or chalking) of the cured film become poor, and also, the preparation of the copolymer is difficult (the gelation occurs in the course of the polymerization) because of poor stability.

The content of the organic silane compound in the polyester-modified vinyl resin is from 5 to 30 % by weight. When the content of silane compound is less than 5 % by weight, the solvent-resistance and staining-resistance of the cured film of the invention are poor. On the other hand, when the content of silane compound is more than 30 % by weight, the stability of the resin lowers.

The content of the vinyl monomer in the polyester-modified vinyl resin is determined so that the total amount of the polyester resin, the organic silane compound and the vinyl monomer is 100 % by weight. Also, kinds of the vinyl monomers are not particularly limited. However, the remarkable increase of the dispersibility of pigments and the adhesion of a cured film to an organic base can be intended by employing a vinyl monomer including a polar group such as a carboxylic acid group, an acid anhydride group, an epoxy group, an amino group, an amido group or hydroxyl group. It is preferable that the content of the vinyl monomer including the polar group is not more than 20 % by weight in the polyester-modified vinyl resin from the point of the storage stability.

The polyester-modified vinyl resin obtained by the above process can be increased in the flexibility and adhesion in addition to the dispersibility of pigments.

As the synthesis of the polyester-modified vinyl resin, there are processes other than the copolymerization method of the polyester resin (A), the organic silane compound (B) and the vinyl monomer (C). For instance, there is a process in which the polyester resin, the vinyl monomer, and allyl methacrylate or allyl acrylate, are copolymerized and an alkoxyl silane is added to the obtained polyester-modified vinyl resin having double bonds by the silylation in the presence of a catalyst such as platinum compound, a process in which the polyester resin, the vinyl monomer and a monomer including an epoxy group such as glycidyl methacrylate or glycidyl acrylate are copolymerized and the obtained polyester-modified vinyl resin including the epoxy group is reacted with an aminosilane such as γ-aminopropyltrimethoxysilane, a process in which the polyester resin, the vinyl monomer, and a monomer including carboxylic acid group or acid anhydride group such as methacrylic acid, acrylic acid or maleic anhydride are copolymerized and the obtained polyester-modified vinyl resin is reacted with γ-glycidoxypropyltrimethoxysilane.

The polyester-modified vinyl polymer of the invention can be employed as a clear coating agent. Moreover, it is preferable that the vinyl polymer is employed as an enamel paint by kneading with pigments from the point of the excellent dispersibility. When an enamel paint is prepared by employing the polyester-modified vinyl polymer, it is possible that the polyester-modified vinyl polymer is employed as a mill base and a silyl group-containing vinyl polymer which is not modified with the polyester (the vinyl polymer is

disclosed in JP-A- 36395/1979, for example) is employed as a cut-back.

As a method for increasing the storage stability of the enamel paint, a dispersion method described in JP-A- 80466/1982 and 89661/1983 can be applied.

In the enamel paint employing the vinyl polymer of the invention, as a pigment or a filler, a pigment or filler employed in usual paints, coating agents, adhesives, sealants, and primers, can be employed. Examples of the pigment are, for instance, an inorganic pigment such as ultramarine blue, iron blue, zinc yellow, red iron oxide, chrome yellow, white lead, carbon black, transparent iron oxide or aluminum powder; azo, triphenylmetane, quinoline, anthraquinone or phthalocyanine organic pigment,. Examples of the filler are, for instance, silica, calcium carbonate, magnesium carbonate, clay, asbestos, mica, talc, graphite, zinc, zinc oxide, calcium oxide, molybdenum sulfide, and glass fiber,. Particularly, carbon black and the organic pigments are preferable.

In the invention, as a dispersion method of paints or fillers, a dispersion method carried out in the dispersion of usual paints, coating agents, adhesives, sealants, and primers, can be applied. Examples of the dispersion process are, for instance, a roll mill process, ball mill process, sand mill process, high-speed impeller mill process, a disperser process, and kneader process,.

The polyester-modified vinyl polymer is formed into an excellent resin at the ordinary temperature or by heating. A curing agent may be employed upon the preparation of the vinyl polymer. When the curing agent is employed in the invention, for instance, a metal salt of a carboxylic acid such as an alkyl titanate, tin octylate, dibutyl tin dilaurylate, lead octylate; a sulfide or mercaptide organotin compound such as monobutyl tin sulfide, dibutyl tin dioctyl mercaptide; an acid catalyst such as p-toluenesulfonic acid, phthalic acid or maleic acid; an amine such as tetraethylenepentamine, triethylenediamine, or N-$\beta$-aminoethyl-$\gamma$-aminopropyltrimetoxysilane; and an alkali catalyst such as calcium hydroxide or sodium hydroxide are effective.

The polyester-modified vinyl resin of the invention can be blended with various resins employed as a paint, coating agent, adhesive, sealant, and primer,. For instance, the vinyl resin can be admixed with a lacquer resin, acrylic lacquer resin, thermosetting acrylic resin, alkyd resin, melamine resin, epoxy resin, and silicone resin, in a suitable blending ratio. The vinyl resin of the invention can increase the adhesion to the base material and properties of the obtained film such as weatherability.

The present invention is more specifically described and explained by means of the following Examples in which all percents and parts are by weight unless otherwise noted.

Preparation Example 1

A four neck flask equipped with a stirrer, an inlet for introducing nitrogen gas, a thermometer and a reflux condenser for taking out a formed water was charged with 40 g of coconut oil fatty acid, 13 g of pentaerythritol, 15 g of trimethylolpropane, 30 g of phthalic anhydride and a proper amount of xylene. After the mixture was reacted at 180°C for 1 hour and at 230°C for 2 hours, 2 g of maleic anhydride was added to the reaction mixture and further the reaction was carried out at 230°C for 1 hour to give a polyester resin having an acid value of 4. The obtained polyester resin was diluted to a solid concentration of 60 % with xylene to give a polyester resin solution having a viscosity of 1000 mPa•s (cP).

A solution in which 2 g of acrylamide dissolved in 2 g of methanol and 3 g of azobisisobutyronitrile were dissolved in 10 g of the obtained polyester resin solution, 30 g of styrene, 10 g of $\gamma$-methacryloxypropyltrimethoxysilane, 20 g of methyl methacrylate, 10 g of n-butyl methacrylate and 20 g of butyl acrylate was added dropwise to 100 g of xylene heated up 100°C, and the reaction was carried out for 10 hours to give a silyl group-containing, polyester-modified vinyl polymer having a number average molecular weight of 8,000.

Preparation Example 2

The same reactor as in Preparation Example 1 was charged with 43 g of coconut oil fatty acid, 10 g of glycerol, 15 g of pentaerythritol, 30 g of phthalic anhydride and a proper amount of xylene. After the mixture was reacted at 180°C for 1 hour and at 240°C for 2 hours, 2 g of maleic anhydride was added to the reaction mixture and further the reaction was carried out at 240°C for 1 hour to give a polyester resin having an acid value of 6. The obtained polyester was diluted to a solid concentration of 60 % with xylene to give a polyester resin solution having a viscosity of 2,500 mPa•s (cP).

A solution in which 5 g of azobisisobutyronitrile and 5 g of n-buthanol were dissolved in 15 g of the obtained polyester resin solution, 30 g of styrene, 10 g of $\gamma$-methacryloxypropyltrimethoxysilane, 20 g of methyl methacrylate, 10 g of n-butyl methacrylate and 20 g of butyl acrylate was added dropwise to 100 g

of xylene heated up 100°C, and the reaction was carried out for 10 hours to give a silyl group-containing, polyester-modified vinyl polymer having a number average molecular weight of 6,000.

Preparation Example 3 (for comparison)

A solution in which 3 g of azobisisobutyronitrile was dissolved in 30 g of styrene, 20 g of γ-methacryloxypropyltrimethoxysilane, 20 g of methyl methacrylate, 20 g of n-butyl methacrylate and 10 g of butyl acrylate was added dropwise to 100 g of xylene heated up 100°C and the mixture was carried out for 10 hours to give a silyl group-containing vinyl polymer having a number average molecular weight of 7,000.

Examples 1 to 4 and Comparative Example 1

Titanium oxide (commercially available under the commercial name "CR-90®", made by Ishihara Sangyo Kaisha, Ltd.) and Phthalocyanine Blue (commercially available under the commercial name "Cyanine Blue 5195®", made by Dainichiseika Color & Chemicals Mfg. Co., Ltd.) were dispersed according to a formation shown in Table 1 to give a white enamel and blue enamels. The weight ratio of mill base resin/ cut-base resin was 3/7. The dispersion was carried out for 2 hours in mill base and for 30 minutes in cut-back by employing glass beads in a paint shaker.

Table 1

| | Mill base resin | Cut-back resin | PWC * | Pigment | Solid concentration (%) |
|---|---|---|---|---|---|
| Ex. 1 | Polyester-modified polymer prepared in Pre. Ex. 1 | Polyester-modified polymer prepared in Pre. Ex. 1 | 10 | Phthalocyanine | 45 |
| Ex. 2 | Polyester-modified polymer prepared in Pre. Ex. 1 | Polyester-modified polymer prepared in Pre. Ex. 1 | 40 | Titanium oxide | 60 |
| Ex. 3 | Polyester-modified polymer prepared in Pre. Ex. 1 | Polymer prepared in Pre. Ex. 3 | 10 | Phthalocyanine Blue | 45 |
| Ex. 4 | Polyester-modified polymer prepared in Pre. Ex. 2 | Polyester-modified polymer prepared in Pre. Ex. 2 | 10 | Phthalocyanine Blue | 45 |
| Com. Ex. 1 | Polymer prepared in Pre. Ex. 3 | Polymer prepared in Pre. Ex. 3 | 10 | Phthalocyanine Blue | 45 |

(Note): * PWC A percentage of pigment in a whole solid

The results of the dispersibility and the color match stability are shown in Table 2.

[Dispersibility]

The enamel diluted with xylene to the volume of twice the original was flow-coated on a glass panel. The surface gloss was observed.

The results are shown in Table 2.

Table 2

| | Dispersibility |
|---|---|
| Ex. 1 | Gloss |
| Ex. 2 | Gloss |
| Ex. 3 | Gloss |
| Ex. 4 | Gloss |
| Com. Ex. 1 | No Gloss (Cohesion of pigment) |

[Color match stability]

The white enamel and the blue enamel were admixed in a solid ratio of 9 : 1 and the mixture was blade-coated on a glass panel by employing a glass rod. Then, the mixture diluted with xylene to the volume of twice the original was flow-coated on that half of the glass panel on which the mixture was blade-coated. The difference of color was observed between the blade-coated surface and the flow-coated surface.

The results are shown in Table 3.

Table 3

| Kinds of enamels | Color match stability |
|---|---|
| Enamels prepared in Ex. 1 and Ex. 2 | No problem ( ΔE* : 0.6) |
| Enamels prepared in Ex. 2 and Ex. 3 | No problem ( Δ E* : 1.3) |
| Enamels prepared in Ex. 2 and Ex. 4 | A little difference ( ΔE* : 3.8) |
| Enamels prepared in Ex. 2 and Com. Ex. 1 | ΔE* : 15.7 |

(note) *: ΔE is color difference.
ΔE is measured by employing a color-difference meter made by Nippon Denshoku Kabushiki Kaisha

From the results of Table 2, it is recognized that the silyl group-containing vinyl polymer modified with the polyester is excellent in dispersibility. Also, even if a polymer having poor dispersibility is employed, the dispersibility can be improved by employing the polymer of the invention having excellent dispersibility as a mill base. On the other hand, from the results of Table 3, among the silyl group-containing vinyl polymers modified with polyester, the vinyl polymer copolymerized with the polar monomer shows an excellent tendency in comparison with the vinyl polymer copolymerized with the non-polar monomer in color match stability.

## Claims

1. A silyl group-containing, polyester-modified vinyl polymer comprising
   (A) 3 to 45 % by weight of units of a polyester resin including a polymerizable unsaturated group,
   (B) 5 to 30 % by weight of units of a silane compound of the formula (I):

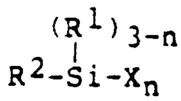

(I)

   wherein $R^1$ is hydrogen atom or a monovalent hydrocarbon group having 1 to 10 carbon atoms selected from the group consisting of an alkyl group, an aryl group and an aralkyl group, $R^2$ is an organic residue having a polymerizable double bond, X is a halogen atom, an alkoxyl group, an acyloxyl group, a ketoxymate group, amino group, an acid amide group, an aminoxy group, a mercapto group, or an alkenyloxy group, and n is an integer of 1 to 3, and
   (C) 25 to 92 % by weight of units of a copolymerizable vinyl monomer.

2. The vinyl polymer of Claim 1, wherein said unit (C) is a vinyl monomer including a polar group.

3. The vinyl polymer of Claim 1, which is prepared by polymerization of said polyester resin, said silane compound and said vinyl monomer in the presence of a solvent including an alcohol.

4. Use of the silyl group-containing, polyester-modified vinyl polymer of claim 1 as film forming agent in coating agents, particularly lacquers.

## Revendications

1. Polymère vinylique modifié par un polyester, contenant des groupes silyles, comprenant
   (A) 3 à 45% en poids d'unité d'une résine polyester incluant un groupe polymérisable insaturé,
   (B) 5 à 30% en poids d'unités d'un composé silané de formule (I):

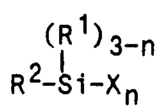

(I)

   dans laquelle $R^1$ est un atome d'hydrogène ou un groupe hydrocarboné monovalent ayant 1 à 10 atomes de carbone choisi dans le groupe constitué d'un groupe alkyle, d'un groupe aryle et d'un groupe aralkyle, $R^2$ est un résidu organique ayant une double liaison polymérisable, X est un atome d'halogène, un groupe alkoxyle, un groupe acyloxyle, un groupe cétoxymate, un groupe amino, un groupe amide acide, un groupe aminoxy, un groupe mercapto, ou un groupe alcényloxy, et n est un nombre entier de 1 à 3, et
   (C) 25 à 92% en poids d'unités d'un monomère vinylique copolymérisable.

2. Polymère vinylique selon la revendication 1, dans lequel ladite unité (C) est un monomère vinylique comprenant un groupe polaire.

3. Polymère vinylique selon la revendication 1, qui est préparé par polymérisation de ladite résine polyester, dudit composé silane et dudit monomère vinylique en présence d'un solvant comprenant un alcool.

4. Utilisation du polymère vinylique modifié par un polyester, contenant des groupes silyles, selon la revendication 1 comme agent filmogène dans des agents de revêtement, particulièrement des laques.

## Patentansprüche

1. Silylgruppenhaltiges, polyestermodifiziertes Vinylpolymer, welches umfaßt:
(A) 3 bis 45 Gew.-% von Einheiten eines Polyesterharzes, welche eine polymerisierbare ungesättigte Gruppe enthalten,
(B) 5 bis 30 Gew.-% von Einheiten einer Silanverbindung der Formel (I):

$$\begin{array}{c}(R^1)_{3-n}\\ |\\ R^2\text{-}Si\text{-}X_n\end{array} \qquad (I)$$

worin $R^1$ Wasserstoffatom oder eine monovalente Kohlenwasserstoffgruppe mit 1 bis 10 Kohlenstoffatomen ist, ausgewählt aus der Gruppe, die aus einer Alkylgruppe, einer Arylgruppe und einer Aralkylgruppe besteht, $R^2$ ein organischer Rest mit einer polymerisierbaren Doppelbindung ist, X ein Halogenatom, eine Alkoxyl- gruppe, eine Acyloxylgruppe, eine Ketoxymatgruppe, Aminogruppe, eine Säure- amidgruppe, eine Aminoxygruppe, eine Mercaptogruppe oder eine Alkenyloxygruppe ist, und n ist eine ganze Zahl von 1 bis 3 und
(C) 25 bis 92 Gew.-% von Einheiten eines copolymerisierbaren Vinylmonomers.

2. Vinylpolymer nach Anspruch 1, worin die genannte Einheit (C) ein Vinylmonomer ist, welches eine polare Gruppe enthält.

3. Vinylpolymer nach Anspruch 1, welches durch Polymerisation des genannten Polyesterharzes, genannter Silanverbindung und genanntem Vinylmonomer in Gegenwart eines Lösungsmittels, welches Alkohol enthält, hergestellt wird.

4. Verwendung eines silylgruppenenthaltenden, polyestermodifizierten Vinylpolymers nach Anspruch 1 als filmbildendes Mittel in Überzugsmitteln, besonders Lacken.